# EUROPEAN PATENT APPLICATION

(11) **EP 0 668 182 A1**
(43) Date of publication of application: **23.08.1995**
(21) Application number: 95301037.8
(22) Date of filing: 17.02.1995
(51) Int. Cl.: B60K 28/12

(54) **Safety automatic system for controlling the shutting of vehicle doors**

(30) Priority: 18.02.1994 BR 9400619
(71) Applicant: de Souza, Jorge Ribeiro, Engenho de Dentro, Rio de Janeiro (BR); de Souza, Nelson Ribeiro, Engenho de Dentro, Rio de Janeiro (BR)
(72) Inventor: de Souza, Jorge Ribeiro, Engenho de Dentro, Rio de Janeiro (BR); de Souza, Nelson Ribeiro, Engenho de Dentro, Rio de Janeiro (BR)
(74) Representative: Carter, Caroline Ann

(57) **Abstract**

The present invention refers to a safety automatic system used to control the shutting of vehicle doors, before the start of said vehicles, preferably the vehicles being public ones, said system comprising a pneumatic circuit which basically contains a double command main cylinder (1) connected through hoses (2) to a manual driving valve to actuate said circuit, and a compressed air tank, where is provided, in the main cylinder (1) of said circuit, a three-way driving valve (8) connected to the inside portion of the cover of the main cylinder (1), in such a way that said valve (8) be secured in the piston stroke of said main cylinder (1), this valve (8) being connected, by means of hoses (2) to a simple command auxiliary cylinder (21) existing under the accelerator pedal (22) of the public vehicle.

## Description

The present invention refers to a safety automatic system used to control the closing of vehicle doors, before starting said vehicle, specially used in public vehicles, the safety automatic system comprising a pneumatic circuit consisting basically of a double command main cylinder, a manual driving valve for driving said circuit, and a three-way automatic driving valve connected to the main cylinder of said system. Said valve communicating, by means of hoses, to an auxiliary cylinder of simple command existing under the accelerator pedal of the vehicle.

The object of said system is to allow the vehicle to go only when its doors are entirely closed , in the contrary, the vehicle will be prevented from moving since the system will not allow the driver to move the accelerator pedal down. This occurs due to the air entering into the chamber of said cylinder which, in turn, distend its piston, and consequently goes against said pedal, locking the same.

Conventionally pneumatic circuits, used in public vehicles, do not have any type of a safety control which checks the driving of the shutting of the door before said vehicle starts. In the prior art systems such control is done by the driver, and it is actuated only when he or she remembers to manipulate the valve which commands the pneumatic circuit for closing or opening the doors.

There are several drawbacks to prior art circuits which are both unfavorable to the vehicle and user. Among said drawbacks we can mention the following examples: the vehicle's door remains open when the same is moving, what can cause the falling out of the user from the vehicle when the user is absent-minded or by a quick driver maneuver; the lack of control of the number of users over the total capacity of the vehicle, what can affect the structure of same and also the users own safety.

Further to the drawbacks mentioned above, it should be pointed out that if the vehicle is moving with the doors open the driver can not be completely alert, thus causing accidents.

The object of present invention is to provide a system , as described above, which safely controls the shutting of vehicles doors, preferably, of public vehicles , thus eliminating ,in a relatively simple way ,the drawbacks of known systems.

Such object is reached by providing an automatic device in the pneumatic circuit of the vehicle door driving, related to the start commands of said vehicle. Such device is a three-way automatic driving valve connected to the main cylinder of the pneumatic circuit for controlling the doors shutting, said valve being related to an auxiliary cylinder of simple command existing under the accelerator pedal of the vehicle.

In a broad aspect the invention provides an apparatus for controlling the operation of a start command of a vehicle, the apparatus comprising a pneumatic circuit arranged such that when the doors of the vehicle are open, operation of the start command is prevented.

In a broad aspect the invention also provides a method of controlling the operation of a start command of a vehicle in which, when the doors of the vehicle are opened, a pneumatic circuit is actuated to prevent operation of the start command.

By means of the present invention it was surprisingly noted that with the provision of said automatic driving valve, positioned in the cover inside portion of the main cylinder , specifically in the piston stroke , there were no need of an extra control for actuating said valve , since the "come" and "go" movement of the main cylinder piston would be responsible for the working of said driving valve which consequently would restrain or not the start of the vehicle.

The invention will be further described in details based on an exemplifying embodiment shown in the drawings. The figures show:

Figure 1 is a schematic view of the automatic system related to the vehicle accelerator pedal using a main cylinder.

Figure 2 is a schematic view showing the automatic system in a position which locks the movement of the accelerator pedal, using a main cylinder.

Figure 3 is a schematic view showing the automatic system in a position which releases the movement of the accelerator pedal, using a main cylinder.

Figure 4 is a schematic view showing the automatic system, using the driving valve connected to the outside portion of the main cylinder.

Figure 5 is a schematic view showing the automatic system, using two main cylinders, with the driving valves being connected to the outside portion of said cylinders.

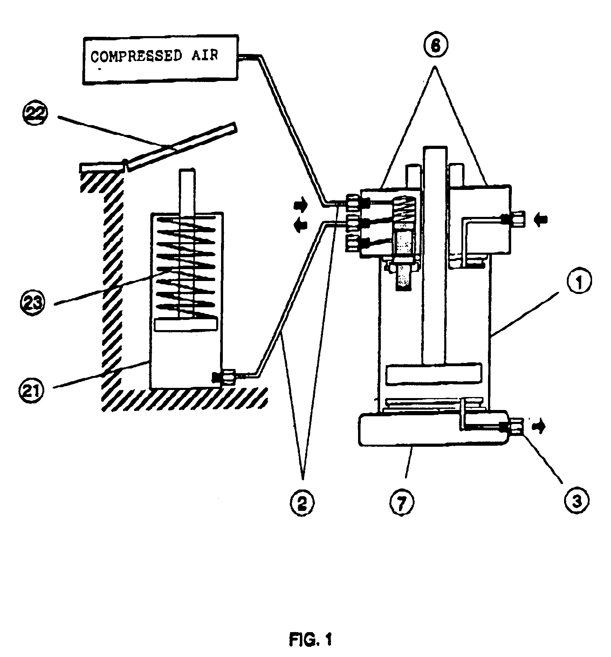

In figures 1, 2 and 3 is shown the automatic system, in an assembled state, with a pneumatic circuit having a main cylinder (1) of double command, interconnected to a compressed air tank by means of air hoses (2) which are fitted in two passageway-connectors (3) which , in turn, are coupled to the air inlet and outlet holes (4) and (5), of cylinder (1), wherein said holes (4) and (5) are positioned respectively in the cover of the upper air chamber (6) and in the cover of the lower air chamber (7) of said cylinder (1).

In the inside portion of the top cover (6) is provided a three-way driving valve (8), positioned in the piston stroke of cylinder (1), which presents a hollow cylindrical shape having in its inside portion a helicoidal spring (9) which is positioned on a piston stroke (10) ,both being arranged in the inside portion of valve (8).

Said piston stroke (10) is comprised of a sealing ring (11) existing in its top end. The piston stroke (10) has, in its bottom end, a bar ring (12), also of the sealing type, which is fitted in the tip of said piston stroke (10), and an elongated cylindrical body called piston guide (13), which is top coupled in the bottom end surface of said piston stroke (10), wherein part of said guide (13) is positioned outside of valve (8), in a way that when the piston of cylinder (1) is completely distended the inside surface of the piston head abuts and press the piston guide into valve (8), which in turn, compresses the helicoidal spring (9).

On the other hand, when the piston of cylinder (1) is drawn back, the inside surface of said piston does not abuts the piston guide (13) and consequently said guide (13) is left under the spring action of spring (9) and it is impelled out of the valve (8) until the bar ring (12) abuts the ring-shaped bumper (14) , wherein said guide (13) pass through the inside portion of said ring-shaped bumper preventing that the piston body goes out from the inside of the valve (8).

In the wall portion of the body of valve (8) there are a cylindrical hole (15) for air intake, a second cylindrical hole (16) for air inlet and outlet, and finally a third cylindrical hole (17) called exhaust hole for the exit of air from the valve inside to the atmosphere , the three holes (15), (16), and (17) being equidistantly positioned along the longitudinal surface of said valve (8).

In the wall portion of cover (9) there are intermediate connections which are used to make the communication between holes (15), (16) and (17) of valve (8) with other external elements which make part of the pneumatic circuit. Said connections are comprised of three cylindrical holes (18), (19), and (20) which are connected to the valve (8), by means of hoses (2) connected to holes (15), (16) and (17), respectively.

Thus, said hole (18) is a connection which interconnects hole (15) to the compressed air tank through hoses (2), the second hole (19) is another connection which interconnects hole (16) to a simple command auxiliary cylinder (21), and finally , the third hole (20) is a free connection which interconnects hole (17) to the atmosphere. Cylinder (21) is arranged below the accelerator pedal (22) of the vehicle, said cylinder (21) having, in its inside portion, a conical helicoidal spring (23) for returning its piston.

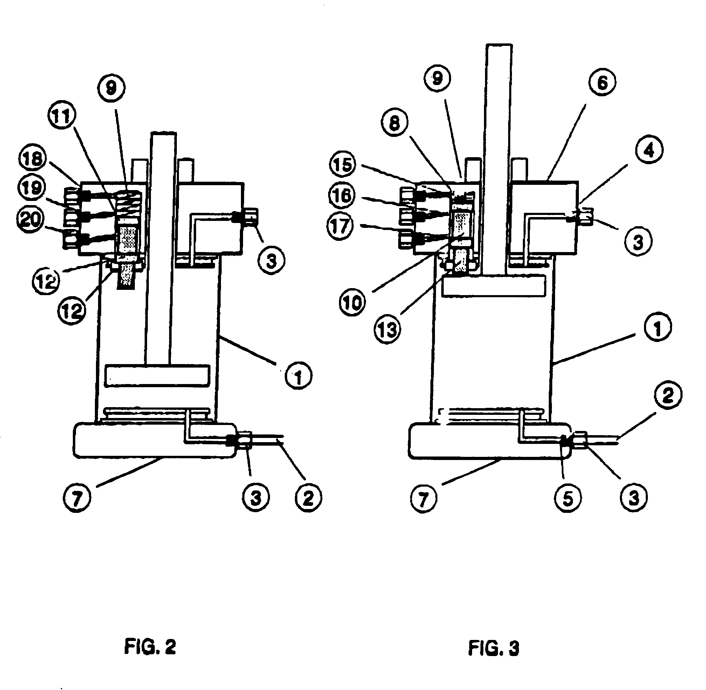

According to figures 2 and 3, the system working operation starts when the driver of the public vehicle actuates a command which releases and drives the compressed air of the tank into an upper chamber of the cylinder (1) by means of hoses (2). This air passing through connector (3) of hole (4) fills the upper chamber, forcing down the movement of the piston of cylinder (1). Consequently, the air which was in the lower chamber of the cylinder (1) escapes by hole (5), through connector (3), to the atmosphere.

In the position described above, where the piston of cylinder (1) is found, piston (10) of valve (8), which was pressed in the inside portion of same, by said piston and thus sealing hole (15) by means of its sealing ring (11), is left under the helicoidal spring action (9), which pushes it down until its bar ring (12) abuts the bumper (14) of valve (8) in a way that the sealing ring (11) be positioned below hole (16) and above the position of hole (17), thus clearing hole (15) and making an automatic air passageway entering from said hole (15) and exiting from hole (16) towards to the air chamber of the auxiliary cylinder (21) existing under the accelerator pedal (22) of the vehicle.

In this case, valve (8) is disarmed and the accelerator pedal of the public vehicle is locked, with no driving, since the air entering in the cylinder (21) distends the piston against said pedal (22), thus preventing the down movement of same, and therefore making the driver unable to start the vehicle while the doors remain open.

On the other hand, from the moment that the commands for shutting the doors of the vehicle are actuated by the driver, the air of the tank is released and directed, by means of hoses (2), to the lower chamber of the cylinder (1). This air passing by connector (3) of hole (5) fills the lower chamber forcing up the movement of the piston of the cylinder (1), therefore, the air which was in the upper chamber of the cylinder (1) escapes by the hole (4) through connector (3) to the atmosphere.

In the position described above, the piston (10) of valve (8), which was in the distended mode, is now in the drawn back position in the inside portion of said valve (8), by means of the direct action of the piston of cylinder (1). Consequently, said piston (10) compresses the helicoidal spring (9) in a way that the sealing ring (11) of said piston (10) is positioned in the inside portion of valve (8), below the position of hole (15) and above the position of hole (16), blocking the air entrance in hole (15). Therefore, in this position, hole (16) is automatically cleared making a mechanical passageway of air return coming from cylinder (21) to enter into valve (8) through said hole (17) towards to the atmosphere.

In this case, valve (8) is armed and the movement for driving the accelerator pedal (22) is released since all air volume existing in the air chamber of cylinder (21) was expelled through holes (16) and (17) of said valve (8). Such effect is caused by the action of the strength applied in said pedal (22), which in turn , with the help of a spring (23), pushes the piston into the cylinder (21) in order that the driver can start the vehicle.

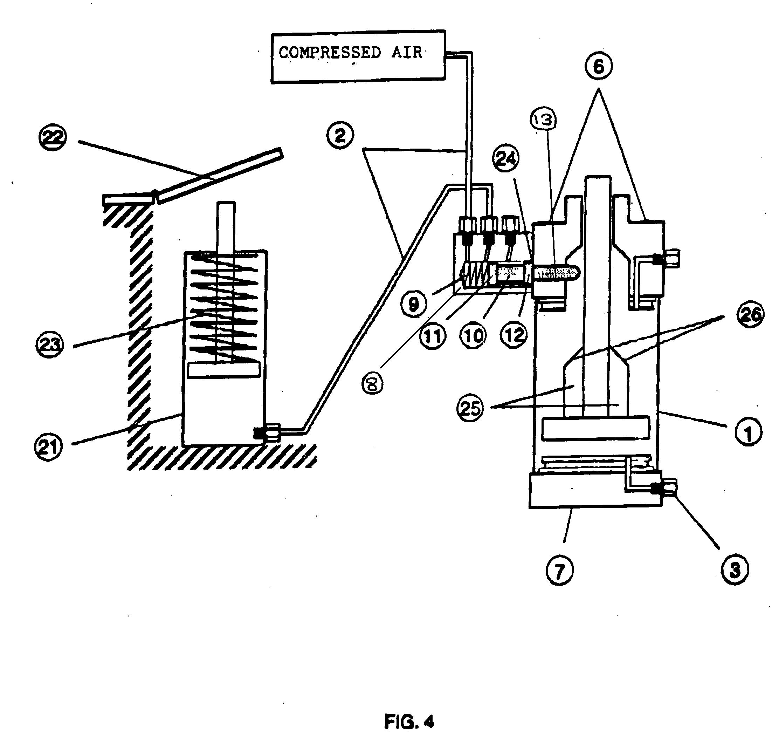

According to figure 4, an alternative embodiment consists that the driving valve (8) installed in the pneumatic circuit can be connected in the outside portion of main cylinder , in a way that said valve be perpendicularly positioned and coupled in the outside side of the top cover (6), in a horizontal way, wherein a hole (24), existing in the side portion of cover (6), permits the introduction and the movement of the stroke of the piston guide (13) into the portion of cylinder (1).

In this embodiment, the piston of cylinder (1) is covered until approximately one third of its length by a cylindrical body (25), wherein the base of said body (25) abuts and it is secured on the inside surface of the head of said piston. This body (25) has a bevel (26), of approximately 45 degrees, in its top end, which makes its end appearing conical.

In the same way, the hole for passing the piston, existing in the top cover (6), has an identical configuration as body (25). Thus, when the piston is distended, said body (25) fits precisely in said hole of cover (6).

With the provision of outer arrangement of valve (8) in cover (6), the working of said valve (8) is done by sliding body (25), specifically shoulder (26) in the piston guide (13) when the piston of cylinder (1) is distended. In this moment, said guide (13) is pushed into valve (8), making the air passage of the tank to the auxiliary cylinder (21).

Driving valve (8) can be connected to any start command of the vehicle, including the brake command. Further, said valve can also be connected to more than one command.

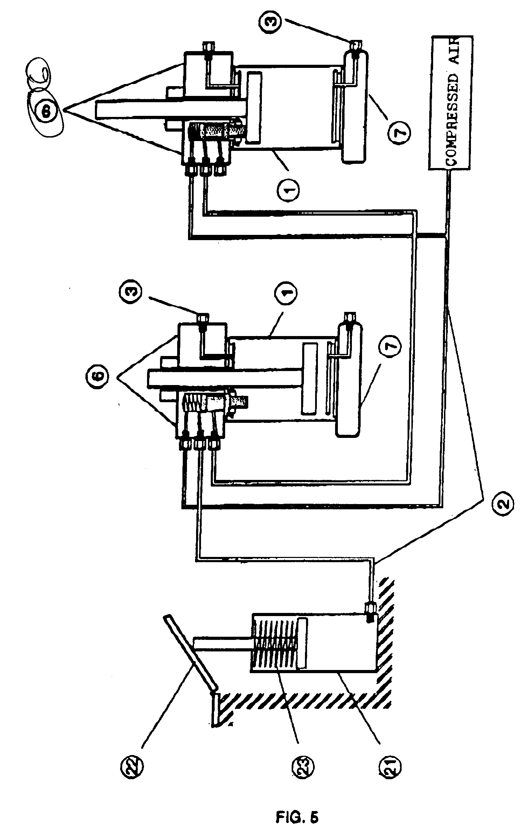

The system shown in the figures can further be enlarged using a driving valve connected to each main cylinder of the pneumatic circuit, such working of said valves being of the independent type or not, as shown in figure 5.

Therefore, in order to obtain a better working of said alternative embodiment , that is , when there are more than one main cylinder (1) interconnected to the system, it is necessary to provide an air flow selective valve connected to said system in a way that all air flow of main cylinders (1) has necessarily to pass by said valve before arriving in the air flow connections of the auxiliary cylinder (21).

The purposes of said valve is to avoid that the air flow coming from a main cylinder passes through another main cylinder, said flow being directly diverted through said valve to the auxiliary cylinder (21). Such embodiment provides quicker driving of the auxiliary cylinder (21), thus making the system more efficient and effective.
The automatic device, called automatic driving valve can also be made with two or four command ways.

The system shown in the figures refers only to an exemplifying embodiment , thus the present invention should be limited only by the appended claims.

## Claims

1. Safety automatic system for controlling the shutting of vehicles doors, before the start of same, comprising a pneumatic circuit containing basically a double command main cylinder interconnected, by means of hoses, to a manual driving valve of said circuit and to a compressed air tank, **characterized by the fact that** it is provided in said pneumatic circuit a driving valve (8) connected to the main cylinder (1) and further connected to any of the start commands of said vehicle.

2. Safety automatic system for controlling the shutting of vehicles doors, according to claim 1, **characterized by the fact that** said valve (8) be provided in the inside portion of the top cover (6) of the main cylinder (1), arranged in a way that said valve (8) be vertically positioned in the piston stroke of the cylinder (1).

3. Safety automatic system for controlling the shutting of vehicles doors, according to claim 1, **characterized by the fact that** said valve (8) be connected through hoses (2), specifically to a simple command auxiliary cylinder (21) existing under said pedal (22).

4. Safety automatic system for controlling the shutting of vehicles doors, according to claim 3, **characterized by the fact that** said valve (8) is a three-way type of a hollow cylindrical shape having in its wall portion a cylindrical hole (15), a second cylindrical hole (16), and a third cylindrical hole (17) positioned in an equidistant way along the longitudinal surface of said valve (8), said valve (8) being also provided, in its inside portion, of a helicoidal spring (9) which is positioned on a cylindrical piston (10), both being arranged in the inside portion of valve (8), wherein said piston (10) is comprised of a sealing ring (11) existing in its top end and in its bottom end, said piston (10) having a bar ring (12) , also of the sealing type, together with an elongated cylindrical body called piston guide (13) which is top coupled in the lower end surface of said piston (10), in a way that said piston (10) pass through the ring-shaped bumper (4) and shows part of its body outside of said valve (8).

5. Safety automatic system for controlling the shutting of vehicles doors, according to claim 3 or 4, **characterized by the fact that** it is provided ,in the cover wall portion, intermediate connections comprised of three cylindrical holes (18), (19) and (20) which are interconnected to the valve (8), by means of hoses (2), connected respectively to holes (15), (16) and (17).

6. Safety automatic system for controlling the shutting of vehicles doors, according to claim 1, **characterized by the fact that** said driving valve (8) is connected to the outside portion of main cylinder (1).

7. Safety automatic system for controlling the shutting of vehicles doors, according to claim 6, **characterized by the fact that** said valve (8) is positioned and coupled perpendicularly in the outside side portion of the top cover (6), in a horizontal position, wherein a hole (24), existing in the cover side portion (6) allows the introduction and movement of the stroke of the piston guide (13) towards to the inside portion of cylinder (1).

8. Safety automatic system for controlling the shutting of vehicles doors, according to claim 6, **characterized by the fact that** the piston of said cylinder (1) is covered until approximately one third of its length by a cylindrical body (25), wherein the base of said body (25) abuts and it is secured on the inside surface of the piston head, the top end of said body (25) having a bevel (26) of approximately 45 degrees which makes its end apparently conical.

9. Safety automatic system for controlling the shutting of vehicles doors, according to any of claims 1,2,3,4 or 6, **characterized by the fact that** said driving valve (8) can be connected to more than one vehicle start commands.

10. Safety automatic system for controlling the shutting of vehicles doors, according to any of claims 1,2,3,4 or 6, **characterized by the fact that** said driving valve (8) can be connected to the break command of the public vehicle.

11. Safety automatic system for controlling the shutting of vehicles doors, according to any of claims 1,2,3,4 or 6, **characterized by the fact that** said driving valve (8) can be further made with two or four command ways.

12. Safety automatic system for controlling the shutting of vehicles doors, according to any of claims 1,2,3,4 or 6, **characterised by the fact that** it is provided more than one driving valve (8) in the pneumatic circuit, said valves working in said circuit, independently or not.

13. An apparatus for controlling the operation of a start command of a vehicle, the apparatus comprising a pneumatic circuit arranged such that when the doors of the vehicle are open, operation of the start command is prevented.

14. A method of controlling the operation of a start command of a vehicle in which, when the doors of the vehicle are opened, a pneumatic circuit is actuated to prevent operation of the start command.
